(19) Europäisches Patentamt / European Patent Office / Office européen des brevets

(11) **EP 4 759 967 A1**

(12) **EUROPEAN PATENT APPLICATION**

(43) Date of publication:
**17.06.2026 Bulletin 2026/25**

(21) Application number: **25222315.1**

(22) Date of filing: **10.12.2025**

(51) International Patent Classification (IPC):
$C23C\ 28/02^{(2006.01)}$    $C23C\ 10/02^{(2006.01)}$
$C23C\ 10/28^{(2006.01)}$    $C23C\ 10/30^{(2006.01)}$
$C23C\ 10/60^{(2006.01)}$    $C21D\ 9/46^{(2006.01)}$
$C25D\ 3/12^{(2006.01)}$    $C25D\ 5/36^{(2006.01)}$
$C25D\ 5/50^{(2006.01)}$    $C25D\ 7/06^{(2006.01)}$
$H01M\ 50/124^{(2021.01)}$    $H01M\ 50/128^{(2021.01)}$

(52) Cooperative Patent Classification (CPC):
**C23C 10/02; C21D 9/46; C23C 10/28; C23C 10/30; C23C 10/60; C23C 28/02; C23C 28/021; C23C 28/023; C25D 3/12; C25D 5/36; C25D 5/50; C25D 7/0614; H01M 50/119; H01M 50/124; H01M 50/128**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.12.2024 KR 20240184205**

(71) Applicant: **TCC Steel Corp.**
**Gyeongsangbuk-do 37862 (KR)**

(72) Inventors:
• **KIM, Yoon Han**
  **37577 Gyeongsangbuk-do (KR)**
• **KWON, Tae Woo**
  **37655 Gyeongsangbuk-do (KR)**
• **SHON, Je Ha**
  **07584 Seoul (KR)**
• **KIM, Tae Geun**
  **37834 Gyeongsangbuk-do (KR)**
• **KIM, Tae Ha**
  **37566 Gyeongsangbuk-do (KR)**
• **HEO, Joon Young**
  **47571 Busan (KR)**
• **LEE, Yo Han**
  **37717 Gyeongsangbuk-do (KR)**

(74) Representative: **Mewburn Ellis LLP**
**Aurora Building**
**Counterslip**
**Bristol BS1 6BX (GB)**

(54) **HIGH STRENGTH NICKEL-PLATED HEAT-TREATED STEEL SHEET FOR BATTERY CASE AND MANUFACTURING METHOD THEREOF**

(57) The present disclosure relates to a high-strength nickel-plated heat-treated steel sheet for a battery case and a manufacturing method thereof. In one embodiment, the nickel-plated heat-treated steel sheet comprises a base steel sheet containing 0.002 to 0.05 wt% of carbon (C); a nickel layer formed on at least one surface of the base steel sheet; and a nickel-iron (Ni-Fe) diffusion layer formed between the base steel sheet and the nickel layer, wherein the nickel-plated heat-treated steel sheet is manufactured by subjecting a plated sheet, in which a nickel plating layer is formed on at least one surface of the base steel sheet, to an alloying heat treatment, and satisfies the condition of the following Equation 1.

[Equation 1]

$$TS_2 - TS_1 \geq 20$$

(In Equation 1, $TS_1$ is the tensile strength (MPa) of the plated sheet, and $TS_2$ is the tensile strength (MPa) of the nickel-plated heat-treated steel sheet.)

【Fig 1】

<u>100</u>

**Description**

CROSS-REFERENCE TO RELATED APPLICATION(S)

This application claims benefit of priority to Korean Patent Application No. 10-2024-0184205, filed on December 11, 2024, in the Korean Intellectual Property Office, the disclosures of which are incorporated herein by reference in their entirety.

BACKGROUND

The present disclosure relates to a high-strength nickel-plated heat-treated steel sheet for a battery case and a manufacturing method thereof. More specifically, the present disclosure provides a high-strength nickel-plated heat-treated steel sheet for a cylindrical battery case and a manufacturing method thereof, wherein solid solution carbon of the nickel-plated steel sheet is diffused using iron-nickel alloying heat treatment to improve yield strength and tensile strength compared to a base cold-rolled steel sheet and to provide excellent battery safety.

Recently, as the use of renewable energy increases and the transition to electric vehicles in the automotive industry accelerates, the battery market is growing rapidly. Among them, chargeable and dischargeable cylindrical lithium-ion batteries are being applied to various industries based on their standardized sizes, significantly expanding their field of application. In addition, cylindrical lithium-ion batteries have a low number of processes, resulting in low production costs, and are advantageous for mass production, so they are rapidly increasing their market share based on these advantages.

A nickel-plated heat-treated steel sheet is used for the lithium (Li) ion cylindrical battery case. The reason is that nickel (Ni), which is a plating element of the nickel-plated heat-treated steel sheet, is a more noble metal than iron (Fe) and is advantageous in protecting the surface, and has excellent spot weldability, formability, and corrosion resistance. In addition, since iron (Fe) has high resistance to alkalis such as lithium ions, the inner surface of the battery case is manufactured with a lower nickel plating amount than the outer surface.

Such materials for cylindrical battery cases require high weldability, formability, and durability. In addition, the material for the cylindrical battery case requires high resistance to case rupture under high-temperature conditions of 300°C or higher, which is known to be highly correlated with the room temperature strength of the material for the cylindrical battery case. Therefore, in order to secure the durability and high-temperature stability of the material for cylindrical batteries, research is being conducted to increase the strength.

Background technology related to the present disclosure is disclosed in Japanese Patent Registration No. 4698205 (Published on June 8, 2011, Title of Invention: Steel sheet for battery case, surface-treated steel sheet for battery case, battery case, and battery).

SUMMARY

One object of the present disclosure is to provide a nickel-plated heat-treated steel sheet having excellent strength, durability, and stability.

Another object of the present disclosure is to provide a nickel-plated heat-treated steel sheet having an excellent strength increasing effect compared to a base steel sheet.

Another object of the present disclosure is to provide a nickel-plated heat-treated steel sheet which has excellent strength even at a thin thickness, thereby having excellent lightweight properties, excellent eco-friendliness, and an effect of increasing battery capacity.

Another object of the present disclosure is to provide a nickel-plated heat-treated steel sheet capable of maximizing battery life from the external environment due to excellent interlayer adhesion, surface conductivity, and corrosion resistance.

Another object of the present disclosure is to provide a method for manufacturing the nickel-plated heat-treated steel sheet.

One aspect of the present disclosure relates to a nickel-plated heat-treated steel sheet. In one embodiment, the nickel-plated heat-treated steel sheet comprises a base steel sheet containing 0.002 to 0.05 wt% of carbon (C); a nickel layer formed on at least one surface of the base steel sheet; and a nickel-iron (Ni-Fe) diffusion layer formed between the base steel sheet and the nickel layer, wherein the nickel-plated heat-treated steel sheet is manufactured by subjecting a plated sheet, in which a nickel plating layer is formed on at least one surface of the base steel sheet, to an alloying heat treatment, and satisfies the condition of the following Equation 1.

[Equation 1]

$$TS_2 - TS_1 \geq 20$$

(In Equation 1, $TS_1$ is the tensile strength (MPa) of the plated sheet, and $TS_2$ is the tensile strength (MPa) of the nickel-plated heat-treated steel sheet.)

In one embodiment, the base steel sheet further comprises 0.01 to 0.05 wt% of titanium (Ti) and 0.01 to 0.05 wt% of niobium (Nb), and may include one or more precipitates selected from TiC, NbC, and (Ti, Nb)C.

In one embodiment, the nickel-plated heat-treated steel sheet may have a thickness of 0.2 to 1.0 mm, and the nickel layer may have a thickness of 0.1 to 6 $\mu$m based on a single side.

Another aspect of the present disclosure relates to a method for manufacturing the nickel-plated heat-treated steel sheet. In one embodiment, the method for manufacturing a nickel-plated heat-treated steel sheet comprises the steps of: manufacturing a plated sheet by forming a nickel plating layer on at least one surface of a base steel sheet containing 0.002 to 0.05 wt% of carbon (C); and manufacturing an intermediate by subjecting the plated sheet to an alloying heat treatment, wherein the alloying heat treatment is carried out by including the steps of: raising the temperature of the plated sheet to perform soaking; and cooling the soaked plated sheet to manufacture an intermediate, wherein the soaking is performed at 650 to 720°C, and the alloying heat treatment is performed under the condition of the following Equation 2.

[Equation 2]

$$10\ °C/sec \leq (T_2-T_1)/(S_1-S_2) \leq 50\ °C/sec$$

(In Equation 2, $T_1$ is the temperature (°C) of the intermediate after cooling is completed, $T_2$ is the temperature (°C) of the plated sheet for which soaking has been completed, $S_1$ is the time (sec) required for the alloying heat treatment, and $S_2$ is the time (sec) required until the temperature of the plated sheet is raised and soaking is completed.)

The nickel-plated heat-treated steel sheet of the present disclosure is excellent in strength, durability, and stability (high-temperature stability, etc.), has an excellent strength increasing effect compared to the base steel sheet, has excellent strength even at a thin thickness, thereby having excellent lightweight properties, excellent eco-friendliness due to reduction in $CO_2$ generation, and excellent effect of increasing battery capacity, and has excellent interlayer adhesion, surface conductivity, and corrosion resistance, thereby maximizing battery life from the external environment.

BRIEF DESCRIPTION OF THE DRAWINGS

FIG. 1 illustrates a nickel-plated heat-treated steel sheet according to one embodiment of the present disclosure;
FIG. 2 is a graph illustrating the tensile strength of nickel-plated heat-treated steel sheets cooled according to the condition of Equation 2 during alloying heat treatment of Examples 1 to 9 and Comparative Examples 1 to 2;
FIG. 3 is an SEM photograph illustrating a cross-section of the nickel-plated heat-treated steel sheet of Example 1; and
FIG. 4 is an SEM photograph illustrating a cross-section of the nickel-plated heat-treated steel sheet of Comparative Example 2.

DETAILED DESCRIPTION OF EXEMPLARY EMBODIMENTS

In describing the present disclosure, if it is determined that a detailed description of related known technologies or configurations may unnecessarily obscure the gist of the present disclosure, the detailed description thereof will be omitted.

In addition, terms to be described later are terms defined in consideration of functions in the present disclosure, which may vary depending on the intention or custom of a user or operator, so the definitions should be made based on the contents throughout this specification describing the present disclosure.

**Nickel-plated Heat-treated Steel Sheet**

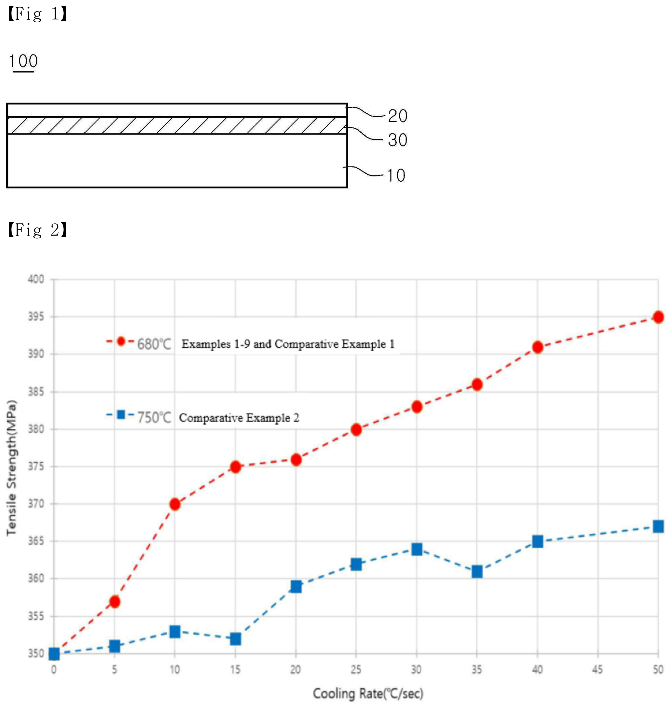

One aspect of the present disclosure relates to a nickel-plated heat-treated steel sheet (or heat-treated steel sheet). FIG. 1 illustrates a nickel-plated heat-treated steel sheet according to one embodiment of the present disclosure. Referring to FIG. 1, the nickel-plated heat-treated steel sheet 100 for a battery case comprises a base steel sheet 10; a nickel layer 20 formed on at least one surface of the base steel sheet 10; and a nickel-iron (Ni-Fe) diffusion layer 30 formed between the base steel sheet 10 and the nickel layer 20.

## Base Steel Sheet

The base steel sheet 10 contains 0.002 to 0.05 wt% of carbon (C). If the carbon content is less than 0.002 wt%, strength and durability decrease, and the strength increasing effect due to carbon re-solution during alloying heat treatment decreases. If it exceeds 0.05 wt%, weldability and formability may decrease. For example, the carbon may be included in an amount of 0.005 to 0.05 wt%, 0.01 to 0.05 wt%, or 0.02 to 0.05 wt%.

In one embodiment, the base steel sheet may further comprise titanium (Ti) and niobium (Nb). Titanium and niobium are dispersion strengthening additive elements, which precipitate in the form of fine carbides after the carbon of the base steel sheet is re-dissolved during the alloying heat treatment, and the strength increasing effect of the nickel-plated heat-treated steel sheet may be excellent due to aging and precipitation strengthening.

In one embodiment, the base steel sheet may contain 0.01 to 0.05 wt% of titanium (Ti). When included in the above range, the grain refinement effect is excellent, fine precipitates are formed by combining with carbon to improve mechanical strength, and the strength increasing effect of the nickel-plated heat-treated steel sheet after the alloying heat treatment may be excellent. For example, the base steel sheet may contain 0.01, 0.02, 0.03, 0.04, or 0.05 wt% of titanium.

In one embodiment, the base steel sheet may contain 0.01 to 0.05 wt% of niobium (Nb). When included in the above range, the grain refinement effect is excellent, and fine precipitates are formed by combining with carbon to improve mechanical strength. The strength increasing effect of the nickel-plated heat-treated steel sheet after the alloying heat treatment may be excellent. For example, the base steel sheet may contain 0.01, 0.02, 0.03, 0.04, or 0.05 wt%.

In one embodiment, the base steel sheet may comprise 0.002 to 0.05 wt% of carbon (C), 0.01 to 0.05 wt% of (Ti), 0.01 to 0.05 wt% of niobium (Nb), and the balance of iron (Fe) and other inevitable impurities.

In one embodiment, the base steel sheet may contain titanium (Ti), niobium (Nb), and carbon (C) in a weight ratio of 1:0.5-5:1-8. When included under the above weight ratio condition, weldability and formability are excellent, and the strength increasing effect and high-temperature stability of the nickel-plated heat-treated steel sheet after the alloying heat treatment may be excellent. For example, the base steel sheet may contain titanium, niobium, and carbon in a weight ratio of 1:1-4:2-7 or 1:2-3:3-5.

In one embodiment, the base steel sheet may include one or more precipitates selected from TiC, NbC, and (Ti, Nb)C. When the precipitates are included, the strength increasing effect of the nickel-plated heat-treated steel sheet after the alloying heat treatment may be excellent.

In one embodiment, cold-rolled products such as black plate (BP) for tin plating and cold rolled steel (CR) may be used as the base steel sheet. When cold-rolled products such as BP and CR are used as the base steel sheet, the strength increasing effect of the nickel-plated heat-treated steel sheet after alloying heat treatment is excellent, and weldability, formability, and durability may be excellent.

In one embodiment, the heat-treated steel sheet may have an average grain size of 3 $\mu$m or less. Under the above condition, formability and mechanical properties may be excellent.

## Nickel Layer

The nickel layer 20 may be included to secure the corrosion resistance and conductivity of the present disclosure. Referring to FIG. 1, a nickel-iron diffusion layer 30 is formed on at least one surface of the base steel sheet 10, and a nickel layer 20 is formed on the upper surface of the nickel-iron diffusion layer 30.

For example, the nickel layer may contain only nickel (Ni).

In one embodiment, the nickel layer may have a thickness of 0.1 to 6 $\mu$m based on a single side. At this thickness, surface contact resistance is low, conductivity characteristics and corrosion resistance are excellent, lightweight properties are excellent, and formability and economic efficiency may be excellent. For example, the nickel layer may have a thickness of 0.1 to 5 $\mu$m or 0.1 to 3 $\mu$m.

## Nickel-Iron Diffusion Layer

The nickel-iron diffusion layer 30 is formed between the base steel sheet 10 and the nickel layer 20 of the heat-treated steel sheet. The nickel-iron diffusion layer 30 may be formed during diffusion heat treatment of the nickel layer 20 to be described later.

In one embodiment, the nickel-iron diffusion layer 30 may contain 0.3 to 25 wt% of nickel (Ni). In one embodiment, the nickel content in the nickel-iron diffusion layer 30 may be measured using Energy Dispersive Spectrometer (EDS) or Electron Probe X-ray Microanalysis (EPMA) after removing the nickel layer 20 of the heat-treated steel sheet. At the nickel content of the nickel-iron diffusion layer, the corrosion resistance and formability of the heat-treated steel sheet are excellent, and the surface contact resistance is low and conductivity may be excellent. For example, the nickel-iron diffusion layer may contain a nickel content of 0.5 to 25 wt% or 1 to 24 wt%.

In one embodiment, the nickel-plated heat-treated steel sheet may have a tensile strength of 370 to 420 MPa. Under the above condition, durability, weldability, and formability may be excellent.

In one embodiment, the nickel-plated heat-treated steel sheet may have a yield strength of 320 to 380 MPa. Under the above condition, durability, weldability, and formability may be excellent.

In one embodiment, the nickel-plated heat-treated steel sheet is manufactured by subjecting a plated sheet, in which a nickel plating layer is formed on at least one surface of the base steel sheet, to an alloying heat treatment, and satisfies the condition of the following Equation 1.

$$[\text{Equation 1}]$$

$$TS_2 - TS_1 \geq 20$$

(In Equation 1, $TS_1$ is the tensile strength (MPa) of the plated sheet, and $TS_2$ is the tensile strength (MPa) of the nickel-plated heat-treated steel sheet.)

When the condition of Equation 1 is satisfied, the tensile strength of the nickel-plated heat-treated steel sheet is improved compared to the base steel sheet due to the diffusion of solid solution carbon during the alloying heat treatment, so safety may be excellent. If the condition of Equation 1 is less than 20, the effect of increasing the tensile strength of the nickel-plated heat-treated steel sheet during the alloying heat treatment is insignificant, and stability may be lowered. For example, Equation 1 may be 20 to 90, 20 to 80, 20 to 70, 20 to 60, or 20 to 50.

In another embodiment, the nickel-plated heat-treated steel sheet is manufactured by subjecting a plated sheet, in which a nickel plating layer is formed on at least one surface of the base steel sheet, to alloying heat treatment and then skin pass rolling, and may satisfy the condition of Equation 1.

In one embodiment, the nickel-plated heat-treated steel sheet is manufactured by subjecting a plated sheet, in which a nickel plating layer is formed on at least one surface of the base steel sheet, to an alloying heat treatment, and may satisfy the condition of the following Equation 1-1.

$$[\text{Equation 1-1}]$$

$$YS_2 - YS_1 \geq 20$$

(In Equation 1-1, $YS_1$ is the yield strength (MPa) of the plated sheet, and $YS_2$ is the yield strength (MPa) of the nickel-plated heat-treated steel sheet.)

When the condition of Equation 1-1 is satisfied, the tensile strength of the nickel-plated heat-treated steel sheet is improved compared to the base steel sheet due to the diffusion of solid solution carbon during the alloying heat treatment, so safety may be excellent. For example, Equation 1-1 may be 20 to 80, 20 to 60, or 20 to 45.

In another embodiment, the nickel-plated heat-treated steel sheet is manufactured by subjecting a plated sheet, in which a nickel plating layer is formed on at least one surface of the base steel sheet, to alloying heat treatment and then skin pass rolling, and may satisfy the condition of Equation 1-1.

In one embodiment, the nickel-plated heat-treated steel sheet may have a thickness of 0.2 to 1.0 mm. Under the above condition, lightweight properties are excellent, weldability and formability are excellent, and mechanical strength may be excellent. For example, the nickel-plated heat-treated steel sheet may have a thickness of 0.2 to 0.8 mm, 0.2 to 0.6 mm, or 0.3 to 0.6 mm.

## Method for Manufacturing Nickel-plated Heat-treated Steel Sheet

Another aspect of the present disclosure relates to a method for manufacturing the nickel-plated heat-treated steel sheet. In one embodiment, the method for manufacturing a nickel-plated heat-treated steel sheet comprises the steps of: (S10) manufacturing a plated sheet by forming a nickel plating layer on at least one surface of a base steel sheet containing 0.002 to 0.05 wt% of carbon (C); and (S20) manufacturing an intermediate by subjecting the plated sheet to an alloying heat treatment. The alloying heat treatment is carried out by including the steps of: raising the temperature of the plated sheet to perform soaking; and cooling the soaked plated sheet to manufacture an intermediate, and the alloying heat treatment is performed under the condition of the following Equation 2.

[Equation 2]

$$10 \ ^\circ\text{C/sec} \ \leq \ (T_2-T_1)/(S_1-S_2) \ \leq \ 50 \ ^\circ\text{C/sec}$$

(In Equation 2, $T_1$ is the temperature (°C) of the intermediate after cooling is completed, $T_2$ is the temperature (°C) of the plated sheet for which soaking has been completed, $S_1$ is the time (sec) required for the alloying heat treatment, and $S_2$ is the time (sec) required until the temperature of the plated sheet is raised and soaking is completed).

(S10) **Plated** Sheet **Manufacturing** Step

This step is a step of manufacturing a plated sheet by forming a nickel plating layer on at least one surface of a base steel sheet containing 0.002 to 0.05 wt% of carbon (C). In one embodiment, the base steel sheet may be subjected to a pretreatment process before forming the nickel plating layer. For example, a pretreatment process including conventional degreasing, water washing, and pickling processes may be performed, but is not particularly limited thereto.

The base steel sheet may be the same as described above.

In one embodiment, the base steel sheet may comprise 0.002 to 0.05 wt% of carbon (C), 0.01 to 0.05 wt% of titanium (Ti), 0.01 to 0.05 wt% of niobium (Nb), and the balance of iron (Fe) and other inevitable impurities.

In one embodiment, the base steel sheet may contain titanium (Ti), niobium (Nb), and carbon (C) in a weight ratio of 1:0.5-5:1-8. When included under the above weight ratio condition, weldability and formability are excellent, and the strength increasing effect and high-temperature stability of the nickel-plated heat-treated steel sheet after the alloying heat treatment may be excellent. For example, the base steel sheet may contain titanium, niobium, and carbon in a weight ratio of 1:1-4:2-7 or 1:2-3:3-5.

In one embodiment, the nickel (Ni) plating may be performed using electroplating (or electrolytic plating). For example, the nickel plating may be performed by a conventional electroplating method using a nickel plating solution (or nickel plating bath). For example, a Watts bath or a sulfamate bath may be used as the plating solution.

In one embodiment, the Watts bath may contain 150 to 400 g/L of nickel sulfate ($NiSO_4$), 20 to 60 g/L of nickel chloride ($NiCl_2$), 10 to 50 g/L of boric acid ($H_3BO_3$), and the balance of water based on 1 L of the plating bath. When electroplating is applied using the above plating bath, the corrosion resistance and conductivity of the heat-treated steel sheet may be excellent, but the conditions are not limited to the above plating bath conditions.

In one embodiment, electroplating using the plating bath may be carried out under conditions of pH 3.0 to 4.8, plating bath temperature 45 to 70°C, and current density 2 to 40 A/dm$^2$, but is not limited thereto. When electroplating is performed under the above plating bath conditions, the corrosion resistance and conductivity of the heat-treated steel sheet may be excellent.

Additives may be used to provide gloss to the nickel plating layer. For example, an additive that does not contain a sulfur component may be used as the additive.

A nickel plating layer may be formed by nickel electroplating at least one surface of the base steel sheet. In one embodiment, the total plating amount of nickel (Ni) during the nickel electroplating may be 4 to 100 g/m$^2$. Under the above condition of nickel plating amount, the workability of the heat-treated steel sheet may be excellent, and corrosion resistance and conductivity may be excellent.

**(S20) Alloying Heat Treatment Step**

This step is a step of manufacturing an intermediate by subjecting the plated sheet to alloying heat treatment (or heat treatment).

In the alloying heat treatment step, an intermediate may be formed from the plated sheet. The intermediate may include a base steel sheet, a nickel layer formed on at least one surface of the base steel sheet, and a nickel-iron (Fe) diffusion layer formed between the nickel layer and the base steel sheet.

During the alloying heat treatment, the nickel (Ni) layer and the nickel-iron (Ni-Fe) diffusion layer are softened to have excellent workability, the heat-treated steel sheet has excellent corrosion resistance and conductivity, and in the process of raising the temperature, soaking, and cooling the plated sheet, the carbon of the base steel sheet is re-dissolved and then precipitated in the form of fine carbides, and the strength increasing effect of the nickel-plated heat-treated steel sheet may be excellent due to aging and precipitation strengthening.

In one embodiment, the alloying heat treatment may be carried out by including (S21) raising the temperature of the plated sheet to perform soaking; and (S22) cooling the soaked plated sheet to manufacture an intermediate.

In one embodiment, the soaking is performed at 650 to 720°C. If the soaking is performed at less than 650°C, iron (Fe) of the base steel sheet and nickel (Ni) of the nickel plating layer do not diffuse to the interface, so the nickel-iron diffusion layer is not easily formed, interlayer adhesion decreases, and the strength increasing effect of the nickel-plated heat-treated steel sheet after the alloying heat treatment decreases. If performed at a temperature exceeding 720°C, the grain size becomes excessively coarse, and the strength increasing effect of the nickel-plated heat-treated steel sheet after the alloying heat treatment may decrease. For example, the soaking may be performed at 670 to 720°C.

In one embodiment, in the step (S21), the plated sheet may be heated to 650 to 720°C, and soaking may be performed while maintaining the raised temperature. In one embodiment, the soaking may be performed for 30 seconds to 10 hours. When heat treatment is performed under the above conditions, the corrosion resistance and conductivity of the heat-treated steel sheet may be excellent.

The atmosphere gas (Gas) used during the soaking is not particularly limited. For example, the atmosphere gas may include one or more of nitrogen ($N_2$) and hydrogen ($H_2$). The atmosphere gas may contain 70 to 98 vol% of nitrogen and 2 to 30 vol% of hydrogen. For example, it may contain 80 to 97 vol% of nitrogen and 3 to 20 vol% of hydrogen.

For example, the atmosphere gas may further include oxygen ($O_2$). The oxygen concentration may be 1.0 to 500 ppm, for example 5.0 to 400 ppm, with respect to the total volume of the atmosphere gas during the soaking.

When the intermediate is manufactured by cooling the soaked plated sheet in the step (S22), the re-dissolved carbon of the base steel sheet precipitates in the form of fine carbides during the cooling process, and the strength increasing effect of the nickel-plated heat-treated steel sheet may be excellent due to aging and precipitation strengthening.

In the step of manufacturing the intermediate, during the process of cooling the plated sheet to manufacture the intermediate, one or more precipitates selected from TiC, NbC, and (Ti, Nb)C may be formed in the base steel sheet. When the precipitates are formed, the strength increasing effect of the nickel-plated heat-treated steel sheet may be excellent.

The alloying heat treatment is performed under the condition of the following Equation 2.

[Equation 2]

$$10 \; °C/sec \; \leq \; (T_2 - T_1)/(S_1 - S_2) \; \leq \; 50 \; °C/sec$$

(In Equation 2, $T_1$ is the temperature (°C) of the intermediate after cooling is completed, $T_2$ is the temperature (°C) of the plated sheet for which soaking has been completed, $S_1$ is the time (sec) required for the alloying heat treatment, and $S_2$ is the time (sec) required until the temperature of the plated sheet is raised and soaking is completed.)

When the soaked plated sheet is cooled under the condition of Equation 2, shape defects of the intermediate are prevented, and the formability of the nickel-plated heat-treated steel sheet may be excellent. If Equation 2 is less than 10 °C/sec, the amount of carbide precipitation increases excessively, the aging effect decreases, and the strength increase effect due to alloying heat treatment decreases, the amount of earing increases during forming, and the shape becomes poor due to the occurrence of burrs. If it exceeds 50 °C/sec, the strength increases excessively, the press mold is damaged during forming, and drawability decreases, so the shape of the formed body may become poor. For example, the alloying heat treatment may be performed under the condition that Equation 2 is 15 to 50, 20 to 50, 30 to 50, or 40 to 50 (°C/sec).

In one embodiment, the plated sheet may be introduced into a heat treatment facility, heated and soaked, and the soaked plated sheet may be cooled to perform alloying heat treatment, and the intermediate for which cooling has been completed may be taken out from the heat treatment facility.

In one embodiment, the temperature ($T_1$) of the intermediate after cooling is completed may be -10°C to 150°C. Under the above condition, while preventing shape defects of the intermediate, formation of an oxide film on the intermediate in the atmosphere is prevented, thereby preventing mold damage during forming and preventing reduction in mold life.

For example, the temperature ($T_1$) of the intermediate after cooling is completed may be the same as the temperature of the intermediate at the time when cooling is completed in the heat treatment facility and it is taken out.

For example, the temperature ($T_2$) of the plated sheet for which soaking has been completed may be the same as the maximum heating temperature of the plated sheet.

For example, the time ($S_1$) required for the alloying heat treatment may be the time taken from charging the plated sheet into the heat treatment facility until the intermediate formed after heating, soaking, and cooling is completed is taken out.

For example, the time ($S_2$) required until the temperature of the plated sheet is raised and soaking is completed may be the time taken from charging the plated sheet into the heat treatment facility until heating and soaking are completed.

In one embodiment, the method for manufacturing a nickel-plated heat-treated steel sheet may further comprise the step of (S30) skin pass rolling the intermediate after the alloying heat treatment step (S20).

(S30) **Skin** Pass **Rolling** Step

This step is a step of manufacturing a skin pass rolled material (or nickel-plated heat-treated steel sheet) by skin pass rolling the intermediate. The skin pass rolling may be performed to control the thickness, shape, and surface roughness of the steel sheet, minimize residual stress of the heat-treated steel sheet, and secure uniform material properties.

The rolling may be performed by introducing the intermediate into a rolling mill and skin pass rolling using an upper work roll and a lower rolling roll of the rolling mill.

In one embodiment, the nickel-plated heat-treated steel sheet is manufactured by subjecting a plated sheet, in which a nickel plating layer is formed on at least one surface of the base steel sheet, to an alloying heat treatment, and may satisfy the condition of the following Equation 1.

$$[\text{Equation 1}]$$

$$TS_2 - TS_1 \geq 20$$

(In Equation 1, $TS_1$ is the tensile strength (MPa) of the plated sheet, and $TS_2$ is the tensile strength (MPa) of the nickel-plated heat-treated steel sheet.)

When the condition of Equation 1 is satisfied, the tensile strength of the nickel-plated heat-treated steel sheet is improved compared to the base steel sheet due to the diffusion of solid solution carbon during the alloying heat treatment, so safety may be excellent. For example, Equation 1 may be 20 to 90, 20 to 80, 20 to 70, 20 to 60, or 20 to 50.

In another embodiment, the nickel-plated heat-treated steel sheet is manufactured by subjecting a plated sheet, in which a nickel plating layer is formed on at least one surface of the base steel sheet, to alloying heat treatment and then skin pass rolling, and may satisfy the condition of Equation 1.

In one embodiment, the nickel-plated heat-treated steel sheet is manufactured by subjecting a plated sheet, in which a nickel plating layer is formed on at least one surface of the base steel sheet, to an alloying heat treatment, and may satisfy the condition of the following Equation 1-1.

$$[\text{Equation 1-1}]$$

$$YS_2 - YS_1 \geq 20$$

(In Equation 1-1, $YS_1$ is the yield strength (MPa) of the plated sheet, and $YS_2$ is the yield strength (MPa) of the nickel-plated heat-treated steel sheet.)

When the condition of Equation 1-1 is satisfied, the tensile strength of the nickel-plated heat-treated steel sheet is improved compared to the base steel sheet due to the diffusion of solid solution carbon during the alloying heat treatment, so safety may be excellent. For example, Equation 1-1 may be 20 to 80, 20 to 60, or 20 to 45.

In another embodiment, the nickel-plated heat-treated steel sheet is manufactured by subjecting a plated sheet, in which a nickel plating layer is formed on at least one surface of the base steel sheet, to alloying heat treatment and then skin pass rolling, and may satisfy the condition of Equation 1-1.

In one embodiment, the nickel-plated heat-treated steel sheet may have an elongation of 30% or more. Under the above condition, strength, weldability, and formability may be excellent. For example, the nickel-plated heat-treated steel sheet may have an elongation of 30 to 40%.

In one embodiment, the nickel-plated heat-treated steel sheet may have a thickness of 0.2 to 1.0 mm. Under the above condition, lightweight properties are excellent, weldability and formability are excellent, and mechanical strength may be excellent. For example, the nickel-plated heat-treated steel sheet may have a thickness of 0.2 to 0.8 mm, 0.2 to 0.6 mm, or 0.3 to 0.6 mm.

In one embodiment, the base steel sheet of the heat-treated steel sheet may have an average grain size of 3 $\mu$m or less. Under the above condition, formability and mechanical properties may be excellent.

Hereinafter, the configuration and operation of the present disclosure will be described in more detail through preferred examples of the present disclosure. However, this is presented as a preferred example of the present disclosure and should not be construed as limiting the present disclosure in any sense. Contents not described herein can be sufficiently technically inferred by those skilled in the art, so a description thereof will be omitted.

**Examples and Comparative Examples**

**Example 1**

(1) Preparation of Base Steel Sheet: A slab containing 0.04 wt% (400 ppm) of carbon (C), 0.01 wt% of titanium (Ti), 0.025 wt% of niobium (Nb), and the balance of iron (Fe) and other inevitable impurities was reheated, and hot rolling and cold rolling were performed to prepare a base steel sheet (carbon steel cold rolled steel sheet) having a thickness of 0.30 mm.

(2) Manufacture of Plated Sheet: The base steel sheet was pretreated by performing alkali degreasing, alkali electrolytic degreasing, and pickling (sulfuric acid aqueous solution), and then nickel electro (electrolytic) plating was performed. Specifically, a plating bath containing 250 g/L of nickel sulfate ($NiSO_4$), 40 g/L of nickel chloride ($NiCl_2$), 40 g/L of boric acid ($H_3BO_3$), and the balance of water, and having a temperature of 60°C and a pH of 3.2 to 4.5 was prepared, and electroplating was performed under a current density of 10 ASD to form a nickel plating layer, thereby manufacturing a plated sheet. At this time, the nickel adhesion amount was measured with a fluorescent X-ray measuring facility (X-ray Fluorescence Analyzer, XRF), and the nickel adhesion amount on the upper surface of the base steel sheet was 10 $g/m^2$, and the nickel adhesion amount on the lower surface was 30 $g/m^2$. The tensile strength ($TS_1$) of the manufactured plated sheet was 350 MPa.

(3) Alloying Heat Treatment: The manufactured plated sheet was charged into a heat treatment furnace, and alloying heat treatment was performed in an atmosphere gas containing 95.5 vol% of nitrogen ($N_2$), 4.4995 vol% of hydrogen ($H_2$), and 5 ppm (0.0005 vol%) of oxygen ($O_2$). Specifically, the plated sheet was heated and soaked, and then the soaked plated sheet was cooled to manufacture an intermediate. The alloying heat treatment was performed under the condition of Equation 2 below.

$$[\text{Equation 2}]$$

$$(T_2-T_1)/(S_1-S_2).$$

In Equation 2, the temperature ($T_2$) of the plated sheet at the time when the soaking was completed was 680°C. In addition, the temperature ($T_1$, °C) of the intermediate at the time when cooling was completed and it was taken out, the time ($S_1$, sec) required for the alloying heat treatment, and the time ($S_2$, sec) required until the temperature of the plated sheet was raised and soaking was completed were measured respectively, and then $T_2-T_1$ and $S_2-S_1$ of Equation 2 were calculated respectively and shown in Table 1 below.

(4) Skin Pass Rolling and Slit Processing: The intermediate was put into a skin pass rolling mill and skin pass rolled for 1 pass at a reduction ratio of 1.2% to manufacture a nickel-plated heat-treated steel sheet.

**Examples 2 to 9**

Nickel-plated heat-treated steel sheets were manufactured in the same manner as in Example 1, except that the conditions of $T_2-T_1$ and $S_2-S_1$ in Table 1 below were applied.

**Comparative Example 1**

A nickel-plated heat-treated steel sheet was manufactured in the same manner as in Example 1, except that the conditions of $T_2-T_1$ and $S_2-S_1$ in Table 1 below were applied.

**Experimental Example**

The tensile strength ($TS_2$, MPa) of the nickel-plated heat-treated steel sheets manufactured in Examples 1 to 9 and Comparative Examples 1 to 3 was measured to measure the tensile strength change value of Equation 1 below, and the elongation was measured, and the results are shown in Table 1 below.

$$[\text{Equation 1}]$$

$$TS_2 - TS_1$$

(In Equation 1, $TS_1$ is the tensile strength (MPa) of the plated sheet, and $TS_2$ is the tensile strength (MPa) of the nickel-plated heat-treated steel sheet).

In addition, for the Examples and Comparative Examples, the change in grain shape or size before/after the alloying heat treatment was visually compared through SEM images, respectively, and the results are shown in Table 1 below. Specifically, if the difference in grain size before and after the alloying heat treatment was 10% or less, it was judged as X, and if it exceeded 10%, it was judged as O.

[Table 1]

| Category | $T_2-T_1$ (°C) | $S_1-S_2$ (sec) | Equation 1 (MPa) | Equation 2 (°C/sec) | Change in Grain | Elongation (%) |
|---|---|---|---|---|---|---|
| Example 1 | 690 | 14 | 49 | 50 | X | 31 |
| Example 2 | 680 | 15 | 45 | 45 | X | 31 |
| Example 3 | 670 | 17 | 41 | 40 | X | 32 |
| Example 4 | 660 | 19 | 36 | 35 | X | 33 |
| Example 5 | 650 | 22 | 33 | 30 | X | 34 |
| Example 6 | 640 | 26 | 30 | 25 | X | 34 |
| Example 7 | 630 | 32 | 26 | 20 | X | 35 |
| Example 8 | 620 | 41 | 25 | 15 | X | 36 |
| Example 9 | 610 | 61 | 20 | 10 | X | 38 |
| Comparative Example 1 | 650 | 130 | 7 | 5 | X | 40 |

Referring to the results of Table 1, Examples 1 to 9 satisfying the condition of Equation 2 of the present disclosure showed an excellent tensile strength increasing effect of the nickel-plated heat-treated steel sheet after alloying heat treatment compared to Comparative Example 1 which deviated from the condition of Equation 2, and it was found that no change in grain shape or size occurred before/after alloying heat treatment.

**Comparative Example 2**

A nickel-plated heat-treated steel sheet was manufactured in the same manner as in Example 1, except that the plated sheet was heated and soaked at 750°C (temperature of the plated sheet at the time when soaking was completed ($T_2$) 750°C), and the cooling condition of Equation 2 was applied at 5 to 50 °C/sec.

FIG. 2 below is a graph illustrating the tensile strength of nickel-plated heat-treated steel sheets cooled according to the condition of Equation 2 during alloying heat treatment of Examples 1 to 9 and Comparative Examples 1 to 2. Referring to FIG. 2, it was found that Comparative Example 1 cooled under conditions deviating from Equation 2 of the present disclosure and Comparative Example 2 exceeding the soaking temperature showed insignificant tensile strength increasing effects of the nickel-plated heat-treated steel sheet after alloying heat treatment compared to Examples 1 to 9, resulting in lowered stability.

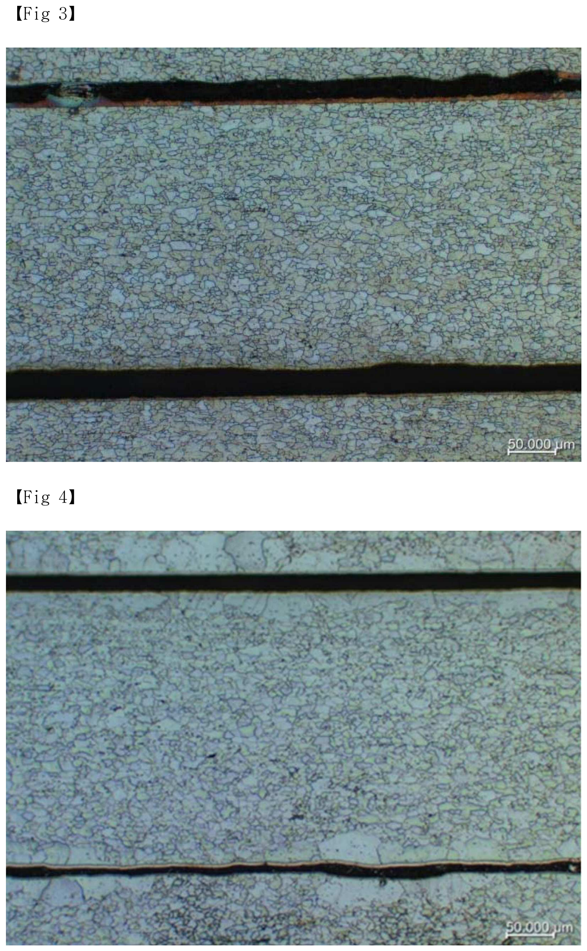

FIG. 3 below illustrates a cross-section of the nickel-plated heat-treated steel sheet of Example 1, and FIG. 4 is an SEM photograph illustrating a cross-section of the nickel-plated heat-treated steel sheet of Comparative Example 2. Referring to FIGS. 3 and 4, it was found that in Comparative Example 2, which exceeded the soaking temperature of the present disclosure, the grain size of the heat-treated steel sheet became coarse and formed unevenly compared to Example 1.

So far, the present disclosure has been examined centering on the examples. Those of ordinary skill in the art to which the present disclosure pertains will be able to understand that the present disclosure can be implemented in modified forms without departing from the essential characteristics of the present disclosure. Therefore, the disclosed examples should be considered from an illustrative point of view rather than a limiting point of view. The scope of the present disclosure is shown in the claims rather than the above description, and all differences within the equivalent scope should be construed as being included in the present disclosure.

[Explanation of Reference Numerals]

10: Base steel sheet 20: Nickel plating layer
30: Nickel-iron diffusion layer 100: Nickel-plated heat-treated steel sheet

**Claims**

1. A nickel-plated heat-treated steel sheet comprising:

   a base steel sheet containing 0.002 to 0.05 wt% of carbon (C);
   a nickel layer formed on at least one surface of the base steel sheet; and
   a nickel-iron (Ni-Fe) diffusion layer formed between the base steel sheet and the nickel layer; wherein,
   the nickel-plated heat-treated steel sheet is manufactured by subjecting a plated sheet, in which a nickel plating layer is formed on at least one surface of the base steel sheet, to an alloying heat treatment, and satisfies the condition of the following Equation 1.

$$【Equation\ 1】$$

$$TS_2 - TS_1 \geq 20$$

   (In Equation 1, $TS_1$ is the tensile strength (MPa) of the plated sheet, and $TS_2$ is the tensile strength (MPa) of the nickel-plated heat-treated steel sheet.)

2. The nickel-plated heat-treated steel sheet of claim 1, wherein the base steel sheet further comprises 0.01 to 0.05 wt% of titanium (Ti) and 0.01 to 0.05 wt% of niobium (Nb), and comprises one or more precipitates selected from TiC, NbC, and (Ti, Nb)C.

3. The nickel-plated heat-treated steel sheet of claim 1, wherein the nickel-plated heat-treated steel sheet has a thickness of 0.2 to 1.0 mm, and the nickel layer has a thickness of 0.1 to 6 $\mu$m based on a single side.

4. A method for manufacturing a nickel-plated heat-treated steel sheet, the method comprising:

   manufacturing a plated sheet by forming a nickel plating layer on at least one surface of a base steel sheet containing 0.002 to 0.05 wt% of carbon (C); and
   manufacturing an intermediate by subjecting the plated sheet to an alloying heat treatment, wherein the alloying heat treatment is carried out by including,
   raising the temperature of the plated sheet to perform soaking; and
   cooling the soaked plated sheet to manufacture an intermediate, wherein the soaking is performed at 650 to 720°C, and the alloying heat treatment is performed under the condition of the following Equation 2.

$$[Equation\ 2]\quad 10\ ^\circ C/sec\ \leq\ (T_2 - T_1)/(S_1 - S_2)\ \leq\ 50\ ^\circ C/sec$$

   (In Equation 2, $T_1$ is the temperature (°C) of the intermediate after cooling is completed, $T_2$ is the temperature (°C) of the plated sheet for which soaking has been completed, $S_1$ is the time (sec) required for the alloying heat treatment, and $S_2$ is the time (sec) required until the temperature of the plated sheet is raised and soaking is completed.)

【Fig 1】

100

【Fig 2】

【Fig 3】

【Fig 4】

**EP 4 759 967 A1**

EUROPEAN SEARCH REPORT

Application Number

EP 25 22 2315

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 2023 164192 A (TOYO KOHAN CO LTD) 10 November 2023 (2023-11-10) * paragraphs [0023], [0025], [0043], [0047], [0078] - [0080], [0089]; claims 1-12; figure 3 * | 1-4 | INV. C23C28/02 C23C10/02 C23C10/28 C23C10/30 C23C10/60 C21D9/46 C25D3/12 C25D5/36 C25D5/50 C25D7/06 H01M50/124 H01M50/128 |
| Y | CN 118 880 189 A (MAANSHAN IRON & STEEL CO LTD) 1 November 2024 (2024-11-01) * paragraph [0038]; claims 1-3 * | 1-3 | |
| Y | US 2022/403542 A1 (GOTO YASUTO [JP] ET AL) 22 December 2022 (2022-12-22) * paragraphs [0033], [0034]; claims 1-7; figures 5-1, 5-2 * | 4 | |
| A | US 2022/178040 A1 (KWON TAE WOO [KR] ET AL) 9 June 2022 (2022-06-09) * paragraphs [0037], [0085], [0086]; claims 1-3 * | 1-4 | |

TECHNICAL FIELDS
SEARCHED      (IPC)

C23C
H01M
C21D
C25D

The present search report has been drawn up for all claims

| Place of search | Date of completion of the search | Examiner |
|---|---|---|
| The Hague | 20 March 2026 | Chalaftris, Georgios |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

14

## ANNEX TO THE EUROPEAN SEARCH REPORT
## ON EUROPEAN PATENT APPLICATION NO.

EP 25 22 2315

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2026

| Patent document cited in search report | | Publication date | Patent family member(s) | | Publication date |
|---|---|---|---|---|---|
| JP 2023164192 | A | 10-11-2023 | CN | 119677898 A | 21-03-2025 |
| | | | EP | 4516972 A1 | 05-03-2025 |
| | | | JP | 2023164192 A | 10-11-2023 |
| | | | KR | 20250004304 A | 07-01-2025 |
| | | | US | 2025297400 A1 | 25-09-2025 |
| | | | WO | 2023210821 A1 | 02-11-2023 |
| CN 118880189 | A | 01-11-2024 | NONE | | |
| US 2022403542 | A1 | 22-12-2022 | CN | 114829678 A | 29-07-2022 |
| | | | EP | 4079942 A1 | 26-10-2022 |
| | | | JP | 6927433 B1 | 01-09-2021 |
| | | | JP | WO2021100211 A1 | 25-11-2021 |
| | | | KR | 20220098767 A | 12-07-2022 |
| | | | US | 2022403542 A1 | 22-12-2022 |
| | | | WO | 2021100211 A1 | 27-05-2021 |
| US 2022178040 | A1 | 09-06-2022 | CN | 114622254 A | 14-06-2022 |
| | | | EP | 4012076 A1 | 15-06-2022 |
| | | | KR | 20220082122 A | 17-06-2022 |
| | | | US | 2022178040 A1 | 09-06-2022 |
| | | | US | 2023349062 A1 | 02-11-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240184205

- JP 4698205 B